# EUROPÄISCHE PATENTSCHRIFT

(11) **EP 0 671 255 B1**
(45) Veröffentlichungstag und Bekanntmachung des Hinweises auf die Patenterteilung: **30.09.1998**
(21) Anmeldenummer: 95103213.5
(22) Anmeldetag: 07.03.1995
(51) Int. Cl.: B29D 30/30

(54) **Verfahren und Vorrichtung zum automatischen Auflegen und Spleissen von Materialbahnen auf eine Reifenaufbautrommel**
Process and apparatus for the automatic depositing and splicing of webs on a tyre building drum
Procédé et dispositif pour l'application et la jonction automatiques de bandes sur un tambour de confection de pneumatiques

(30) Priorität: 10.03.1994 DE 4407964
(43) Veröffentlichungstag der Anmeldung: 13.09.1995
(73) Patentinhaber: Continental Aktiengesellschaft, 30165 Hannover (DE)
(72) Erfinder: Sergel, Horst, D-30657 Hannover (DE); Kölker, Martin, D-30163 Hannover (DE)

(56) Entgegenhaltungen:
- EP-A- 0 109 475
- EP-A- 0 164 709
- EP-A- 0 447 273
- EP-A- 0 515 227
- US-A- 4 474 338
- US-A- 4 769 104

## Beschreibung

Die Erfindung betrifft ein Verfahren zum automatischen Auflegen von zu verspleißenden, geschnittenen, insbesondere schräg geschnittenen Materialbahnen mit unterschiedlichen Längentoleranzen auf eine in ihrer Drehgeschwindigkeit veränderlichen Reifenaufbautrommel zur Herstellung von Reifenrohlingen, wobei die zu verarbeitenden Materialbahnen mit einem quasi endlosen Zuführförderband zugeführt werden.

Die Erfindung betrifft weiterhin eine Vorrichtung zur Durchführung des Verfahrens.

Derartige Materialbahnen können aus mit schräg verlaufenden Festigkeitsträgern verstärktem Rohgummi bestehen und können manuell oder automatisch einer Reifenaufbautrommel zugeführt werden. Die Materialbahnen werden mit Hilfe eines Trennmessers von einem Materialwickel abgelängt. Das Trennmesser sucht sich dabei stets den Zwischenraum zwischen zwei Festigkeitsträgern. Dadurch entstehen unterschiedliche Materialbahnlängen, wobei die Längenunterschiede ca. 10 bis 20 mm betragen können. Bei Materialbahnen ohne eingebettete Festigkeitsträger können ebenfalls Schneidetoleranzen vorhanden sein.

Beim Auflegen von Materialbahnen kann als Endzustand eine definierte Überlappung der Enden oder aber ein stumpfes Aneinanderstoßen der Enden erwünscht sein. Nachfolgend wird der letztere Fall behandelt. Ist eine Materialbahn zu lang, so führt diese zu Überlappungen, die wiederum unerwünschte Materialanhäufungen darstellen. Ist eine Materialbahn zu kurz, so entstehen Lücken, die zu unerwünschten Materialschwächungen führen. Beim Auflaufen auf die Reifenaufbautrommel müssen die Materialbahnen deshalb entweder gestaucht werden, um sie zu kürzen oder sie müssen gestreckt werden, um Lücken zu überbrücken.

Aus der DE 32 13 366 C2 ist ein Verfahren bekannt, bei dem die Materialbahnen auf Untermaß zugeschnitten werden, um dann nachfolgend durch eine Trommel mit entsprechendem Umfang und Durchmesser auf das gewünschte Maß gestreckt zu werden. Ungünstig daran ist, daß für jede Lage und fast jeden Arbeitsvorgang eine unterschiedliche Trommel verwendet bzw. der Trommeldurchmesser verändert werden muß.

Aus der EP 0 164 709 B1 ist ein Verfahren bekannt, bei dem die Drehgeschwindigkeit der Reifenaufbautrommel auf die Zuführungsgeschwindigkeit des Auflegebandes abgestimmt wird. Dabei wird eine gegebener Ist-Wert einer Materialbahn mit dem Soll-Wert, der durch den Umfang der Trommel gegeben ist, automatisch verglichen. Die Längenmessung geschieht durch einen lichtschranken-gesteuerten Impulszähler, wobei jeder Impuls einem bestimmten Längenvorschub entspricht. Aus dem Verhältnis von Ist- zu Soll-Wert wird ein Geschwindigkeitsverhältnis errechnet, welches der Steuerung der Antriebe von Auflegeband und Aufbautrommel aufgegeben wird. Nachteilig dabei ist, daß Änderung der Drehgeschwindigkeit der Reifenaufbautrommel erfolgt, sobald die Materialbahn auf sie aufläuft. Da die Materialbahnen, bedingt durch die schrägverlaufenden Festigkeitsträger, als Rauten geschnitten sind, greifen bei einer Beschleunigung der Reifenaufbautrommel die die Materialbahn streckenden Zugkräfte zunächst nur an der einlaufenden Materialbahnspitze an - dadurch kommt es hier zu einer relativ hohen spezifischen Zugbelastung, durch die die Materialbahn in ihrer Breite verringert werden kann.

Aufgabe der vorliegenden Erfindung ist es, ein Verfahren der eingangs beschriebenen Art zu schaffen, mit dem ungleichmäßige Zugbelastungen und Breitenänderungen vermieden und die Enden einer Materialbahn kontrolliert auf einer Reifenaufbautrommel verspleißt werden können.

Gelöst wird diese Aufgabe dadurch, daß das Zuführförderband und die Reifenaufbautrommel im Anfangs- und Endbereich der aufzulegenden Materialbahn im wesentlichen mit gleicher Geschwindigkeit laufen, die kleiner ist als die im Mittelbereich der Materialbahn, und daß im Mittelbereich der Materialbahn die Reifenaufbautrommel mit höherer, jedoch konstanter Geschwindigkeit dreht, während die Geschwindigkeit des Zuführförderbandes ebenfalls höher ist, jedoch in Abhängigkeit von der tatsächlichen Länge der Materialbahn variiert wird.

Zur Ausgestaltung der Erfindung ist vorgesehen, daß die Drehgeschwindigkeit der Reifenaufbautrommel während des Auflaufens der Materialbahnanfangs- und -endbereiche im wesentlichen synchron mit dem zuführenden Endlosförderband läuft, sowie daß die Längenmessung jeder einzelnen Materialbahn mit einer elektronischen Meßeinrichtung, z.B. einer optoelektronischen oder kapazitiven erfolgt.

Auch kann durch eine kontinuierliche Überwachung des Auflege- und Spleißvorganges dafür Sorge getragen werden, daß optimale Resultate erzielt werden. Dies setzt eine permanente Eingriffsmöglichkeit in den Dehn- und Stauchvorgang voraus. Diese Möglichkeit ist dadurch gegeben, daß das Übersetzungsverhältnis zwischen Zuführsystem und Aufbautrommel während der Übertragung von Materialbahn auf die Aufbautrommel überwacht und reguliert wird.

Eine weitere Aufgabe der Erfindung besteht darin, eine Vorrichtung zu schaffen, mit der das oben beschriebene Verfahren durchgeführt werden kann.

Gelöst wird diese Aufgabe bei einer Vorrichtung mit einer Reifenaufbautrommel, mit einem Zuführförderband sowie mit elektronischen Meßeinrichtungen zur Längenmessung an einer Materialbahn dadurch, daß die Antriebe für die Reifenaufbautrommel und für das Zuführförderband eine Regeleinrichtung umfassen, mit der das Zuführförderband und die Reifenaufbautrommel im Anfangs- und Endbereicht der aufzulegenden Materialbahn mit im wesentlichen gleicher, niedriger Geschwindigkeit antreibbar sind, während sie im Mittelbereich der Materialbahn mit höherer Geschwindigkeit antreibbar sind, wobei in diesem Mittelbereich die Drehgeschwindigkeit der Reifenaufbautrommel konstant ist, wahrend die Geschwindigkeit des Zuführförderbandes in Abhängigkeit von der tatsächlichen Länge der Materialbahn variierbar ist.

Durch die erfindungsgemäße Regelung der Geschwindigkeit des Zuführförderbandes anstelle etwa der Reifenaufbautrommel und durch die reduzierte Geschwindigkeit der Aufbautrommel und des Zuführförderbandes am Anfang und Ende der Materialbahn erhält man den Vorteil, daß jede Materialbahn trotz unterschiedlicher Längentoleranzen exakt mit stumpf aneinander stoßenden Enden auf der Reifenaufbautrommel aufgelegt wird, ohne daß nennenswerte Verformungen an den Materialbahnenden aufgrund von Stauch- oder Dehnkräften auftreten. Weiterhin ergibt sich der Vorteil, daß bei Regelung des Zuführförderbandes auch bei Verwendung von Aufbautrommeln unterschiedlichen Durchmessers die Regelung erheblich erleichtert wird.

Weitere vorteilhafte Maßnahmen sind in den übrigen Unteransprüchen beschrieben. Die Erfindung ist anhand eines Ausführungsbeispieles in den beiliegenden Zeichnungen dargestellt und wird nachfolgend näher beschrieben.

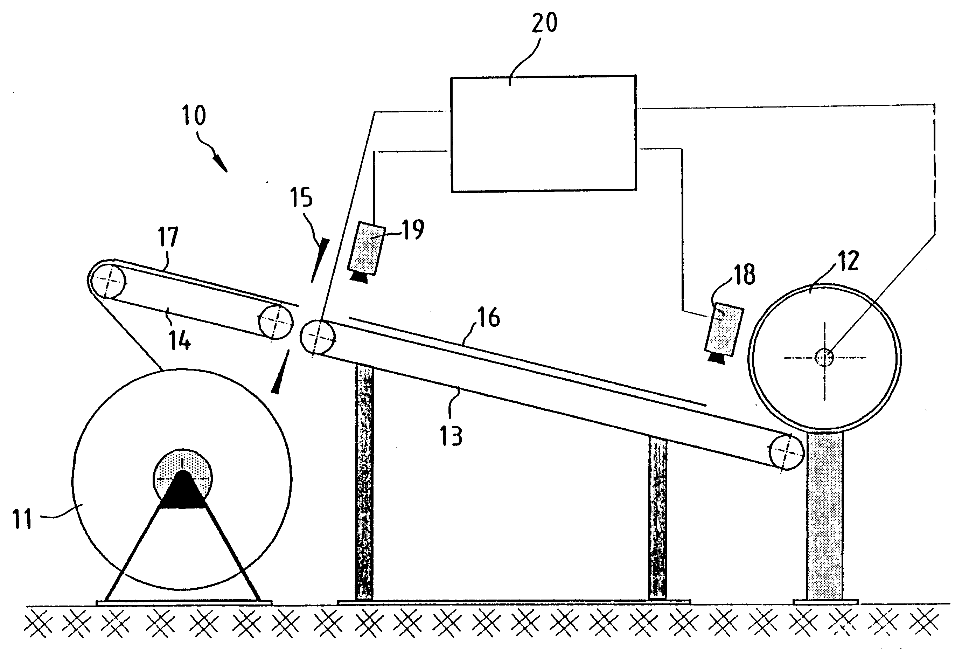

Die in der einzigen Figur dargestellte Auflege- und Spleißvorrichtung 10 besteht im wesentlichen aus einem Materialwickel 11, einem Zuführförderband 13 und einer Reifenaufbautrommel 12. Mit dem Zuführförderband 13 können der Reifenaufbautrommel 12 Materialbahnen 16 zugefördert und dort zu nicht näher dargestellten Fahrzeug-Luftreifen aufgebaut werden.

Auf dem Materialwickel 11 wird das zu verarbeitende Material 17, beispielsweise kalandriertes und mit schräg verlaufenden Festigkeitsträgern versehenes Rohgummi, bereit gestellt. Das bereitgestellte, quasi endlose Material 17 kann mit einem Abziehförderband 14 von dem Materialwickel 11 abgezogen und einer Schneidvorrichtung 15 zugefördert werden. Die Schneidvorrichtung 15 sucht selbständig eine Schnittstelle zwischen zwei Festigkeitsträgern, beispielsweise textilen Cords oder metallischen Strings, und längt eine in ihrer Länge vom Umfang der Reifenaufbautrommel 12 abhängige Materialbahn 16 ab.

Durch die schrägverlaufenden Festigkeitsträger werden die Materialbahnen 16 zu Rauten geschnitten und weisen zu dem unterschiedliche Längen auf, deren Differenzen bis zu 20 mm betragen können. Derartig unterschiedliche Längen führen auf der Reifenaufbautrommel 12 entweder zu Materialspalten oder zu Materialanhäufungen durch Überlappungen; beides ist beim Aufbau eines Reifens, bei dem die Lagenenden stumpf aneinander stoßen sollen, unerwünscht.

Zwischen den Festigkeitsträgern befindet sich plastischer Rohgummi. Dadurch kann die Länge einer abgelängten Materialbahn 16 durch Stauchen verkürzt oder durch Strecken verlängert werden. Praktisch wird dies im Mittelbereich der Materialbahn durch eine Änderung der Relativgeschwindigkeit zwischen dem variierbar laufenden Zuführförderband 13 und der in ihrer Drehgeschwindigkeit konstanten Reifenaufbautrommel 12 durchgeführt. Läuft das Zuführförderband 13 schneller als die Reifenaufbautrommel 12, so kommt es zum Stau, und die Materialbahn 16 wird durch Stauchen verkürzt. Läuft umgekehrt das Zuführförderband 13 langsamer als die Reifenaufbautrommel, so wird die Materialbahn 16 gestreckt. Die Geschwindigkeit des Zuführförderbandes 13 kann in Abhängigkeit von der tatsächlichen Länge der abgelängten Materialbahn 16 variiert werden. Um diese tatsächliche Länge feststellen zu können, sind dem Zuführförderband 13 eine erste Meßeinrichtung 18 zum Feststellen ihres Anfangs und eine zweite Meßeinrichtung 19 zum Feststellen ihres Endes zugeordnet. Als besonders geeignet haben sich dabei opto-elektronische Meßeinrichtungen 18 bzw. 19 erwiesen.

Da die Materialbahnen 16 rautenförmig geschnitten sind, laufen sie zuerst mit einer Rautenspitze auf die Reifenaufbautrommel 12 auf. Bei einer Beschleunigung der Reifenaufbautrommel 12 würden die Zugkräfte, die beispielsweise die Materialbahn 16 strecken sollen, zunächst nur an der einlaufenden Materialbahnspitze angreifen. Dadurch käme es hier zu einer relativ hohen spezifischen Zugbelastung, und die Materialbahn 16 würde in ihrer Breite verringert werden.

Nachfolgend wird das Verfahren beschrieben.

Es wird von einem Zustand ausgegangen, bei dem eine Materialbahn 16 mittels der Schneideeinrichtung 15 abgelängt worden ist und sich auf dem Zuführförderband 13 befindet. Dort wird ihre Länge von den opto-elektronischen Meßeinrichtungen 18 bzw. 19 ermittelt.

Das Zuführförderband 13 und die Aufbautrommel 12 sind über eine Regeleinrichtung 20 in ihrem Bewegungsablauf derart aufeinander abgestimmt, daß das Auflaufen des Spitzenanfangsbereichs und des Spitzenendbereichs der Materialbahn 16 mit geringen Geschwindigkeiten erfolgen, während das Auflegen des Mittelbereichs der Materialbahn 16 mit einer erhöhten Geschwindigkeit erfolgt. Dabei ist für diesen Mittelbereich die Geschwindigkeit der Aufbautrommel 12 konstant, während die Geschwindigkeit des Zuführförderbandes 13 in diesem Mittelbereich der Materialbahn 16 je nach Abweichung der tatsächlichen Länge der Materialbahn 16 vom Umfang der Aufbautrommel 12 nach oben oder unten variiert wird. Wird die Geschwindigkeit des Zuführförderbandes 13 erhöht, resultiert daraus eine Stauchung der Materialbahn 16, im umgekehrten Fall eine Längendehnung. Durch den beschriebenen Regelmechanismus, der in der Regeleinrichtung 20 erzeugt wird, erreicht man, daß die Materialbahn 16 in der Weise auf die Aufbautrommel 12 gelegt wird, daß im Endzustand die Enden exakt stumpf aneinander stoßen.

Eine Verfeinerung des vorstehend beschriebenen Verfahrens erhält man dadurch, daß man z. B. nach dem Auflegen der Hälfte der Materialbahn 16 das Ende der Bahn mittels der Meßeinrichtung 18 erfaßt und mittels eines Soll-Ist-Vergleichs ermittelt, ob die vorher durchgeführte Variation der Geschwindigkeit des Zuführförderbandes 13 korrekt verlaufen ist.

Im Falle einer Abweichung hat man noch die Möglichkeit, die Geschwindigkeit des Zuführförderbandes 13 erneut geringfügig zu variieren, so daß mit einer gerinfügigen Längenänderung der zweiten Hälfte der Materialbahn 16 der gewünschte Endzustand einer Auflage mit exakt stumpf aneinander stoßenden Enden erzielt wird

### Bezugszeichen

- 10: Auflege- und Spleißvorrichtung
- 11: Materialwickel
- 12: Reifenaufbautrommel
- 13: Zuführförderband
- 14: Abziehförderband
- 15: Schneideinrichtung
- 16: Materialbahn
- 17: Material
- 18: Meßeinrichtung, Anfang
- 19: Meßeinrichtung, Ende
- 20: Regeleinrichtung

## Patentansprüche

1. Verfahren zum automatischen Auflegen von zu verspleißenden, geschnittenen, insbesondere schräg geschnittenen Materialbahnen mit unterschiedlichen Längentoleranzen auf eine in ihrer Drehgeschwindigkeit veränderliche Reifenaufbautrommel zur Herstellung von Reifenrohlingen, wobei die zu verarbeitenden Materialbahnen mit einem quasi endlosen Zuführförderband zugefördert werden,
**dadurch gekennzeichnet,**
daß das Zuführförderband und die Reifenaufbautrommel im Anfangs- und Endbereich der aufzulegenden Materialbahn im wesentlichen mit gleicher Geschwindigkeit laufen, die kleiner ist als die im Mittelbereich der Materialbahn, und daß im Mittelbereich der Materialbahn die Reifenaufbautrommel mit höherer, jedoch konstanter Geschwindigkeit dreht, während die Geschwindigkeit des Zuführförderbandes ebenfalls höher ist, jedoch in Abhängigkeit von der tatsächlichen Länge der Materialbahn variiert wird.

2. Verfahren nach Anspruch 1, dadurch gekennzeichnet, daß die Drehgeschwindigkeit der Reifenaufbautrommel während des Auflaufens der Materialbahnanfangs- und -endbereiche synchron mit dem zuführenden endlosen Zuführförderband läuft.

3. Verfahren nach Anspruch 1, dadurch gekennzeichnet, daß während des Auflaufens der Materialbahnanfangs- und -endbereiche zur Vermeidung von Beulen in der Materialbahn die Zuführgeschwindigkeit des Zuführförderbandes geringfügig kleiner gewählt wird als die Drehgeschwindigkeit der Reifenaufbautrommel.

4. Verfahren nach Anspruch 1, dadurch gekennzeichnet, daß die Längenmessung jeder einzelnen Materialbahn mit einer elektronischen Meßeinrichtung erfolgt.

5. Verfahren nach den Ansprüchen 1 und 4, dadurch gekennzeichnet, daß die Längenmessung jeder einzelnen Materialbahn mit dem sie zuführenden Zuführförderband zugeordneten elektronischen Meßeinrichtungen erfolgt.

6. Vorrichtung zur Durchführung des Verfahrens nach Anspruch 1 mit einer Reifenaufbautrommel (12), mit einem Zufuhrförderband (13) sowie mit elektronischen Meßeinrichtungen (18, 19) zur Längemessung an einer Materialbahn (16), dadurch gekennzeichnet, daß die Antriebe für die Reifenaufbautrommel (12) und für das Zuführförderband (13) eine Regeleinrichtung (20) umfassen, mit der das Zuführförderband (13) und die Reifenaufbautrommel (12) im Anfangs- und Endbereich der aufzulegenden Materialbahn (16) mit im wesentlichen gleicher, niedriger Geschwindigkeit antreibbar sind, während sie im Mittelbereich der Materialbahn (16) mit höherer Geschwindigkeit antreibbar sind, wobei in diesem Mittelbereich die Drehgeschwindigkeit der Reifenaufbautrommel (12) konstant ist, während die Geschwindigkeit des Zuführförderbandes (13) in Abhängigkeit von der tatsächlichen Länge der Materialbahn (16) variierbar ist.

## Claims

1. Method of automatically depositing cut, more especially inclinedly cut, webs of material which are to be Joined and have different length tolerances, on a tyre building drum, which has a variable speed of rotation, to produce tyre blanks, the webs of material which are to be processed being conveyed by a quasi endless conveyor belt, characterised in that, in the initial and terminal regions of the web of material to be deposited, the conveyor belt and the tyre building drum travel substantially at the same speed, which is lower than that in the central region of the web of material, and in that, in the central region of the web of material, the tyre building drum rotates at a higher, but constant, speed, while the speed of the conveyor belt is also higher, but is varied in dependence on the actual length of the web of material.

2. Method according to claim 1, characterised in that the speed of rotation of the tyre building drum during the passage of the initial and terminal regions of the web of material is synchronous with the feeding, endless conveyor belt.

3. Method according to claim 1, characterised in that, to avoid buckling phenomena in the web of material during the passage of the initial and terminal regions of the web of material, the conveying speed of the conveyor belt is selected to be slightly lower than the speed of rotation of the tyre building drum.

4. Method according to claim 1, characterised in that the length of each individual web of material is measured with an electronic measuring means.

5. Method according to claims 1 and 4, characterised in that the length of each individual web of material is measured with electronic measuring means associated with the conveyor belt conveying it.

6. Apparatus for accomplishing the method according to claim 1, having a tyre building drum (12), a conveyor belt (13) and electronic measuring means (18, 19) for measuring the length of a web of material (16), characterised in that the drives for the tyre building drum (12) and for the conveyor belt (13) include a regulating means (20), with which the conveyor belt (13) and the tyre building drum (12) are drivable at a substantially identical, low speed in the initial and terminal regions of the web of material (16) which is to be deposited, while they are drivable at a higher speed in the central region of the web of material (16), the speed of rotation of the tyre building drum (12) being constant in this central region, while the speed of the conveyor belt (13) is variable in dependence on the actual length of the web of material (16).

## Revendications

1. Procédé pour l'application automatique de bandes de matériau découpées, notamment découpées obliquement, qui doivent être réunies et sont affectées de tolérances différentes de longueur, sur un tambour de fabrication de pneumatiques, dont la vitesse de rotation est variable et qui sert à fabriquer des ébauches de pneumatiques, les bandes de matériau à traiter étant amenées à l'aide d'une bande convoyeuse d'amenée quasiment sans fin,
caractérisé en ce
que dans la partie de début et la partie d'extrémité de la bande de matériau à appliquer, la bande convoyeuse d'amenée et le tambour de construction de pneumatiques se déplacent, essentiellement à la même vitesse, qui est inférieure à la vitesse de la bande de matériau dans la partie médiane de ce dernier, et
que dans la partie médiane de la bande de matériau, le tambour de construction de pneumatiques tourne avec une vitesse accrue, mais constante, tandis que la vitesse de la bande convoyeuse d'amenée est également supérieure, mais est modifiée en fonction de la longueur effective de la bande de matériau.

2. Procédé selon la revendication 1, caractérisé en ce que la vitesse de rotation du tambour de fabrication de pneumatiques évolue en synchronisme avec la bande convoyeuse d'amenée sans fin, lors de la réunion des parties de début et d'extrémité de la bande de matériau.

3. Procédé selon la revendication 1, caractérisé en ce que lors de la réunion des parties de début et d'extrémité de la bande de matériau, pour éviter des renflements dans la bande de matériau, la vitesse d'amenée de la bande convoyeuse d'amenée est choisie légèrement inférieure à la vitesse de rotation du tambour de fabrication de pneumatiques.

4. Procédé selon la revendication 1, caractérisé en ce que la mesure de la longueur de chaque bande individuelle de matériau s'effectue avec un dispositif de mesure électronique.

5. Procédé selon les revendications 1 et 4, caractérisé en ce que la mesure de longueur de chaque bande individuelle de matériau s'effectue à l'aide de dispositifs électroniques de mesure, qui sont associés à la bande convoyeuse d'amenée, qui arrive.

6. Dispositif pour la mise en oeuvre du procédé selon la revendication 1, comportant un tambour (12) de fabrication de pneumatiques, comportant une bande convoyeuse d'amenée (13) ainsi que des dispositifs électroniques de mesure (18, 19) pour la mesure de la longueur sur une bande de matériau (16), caractérisé en ce que les dispositifs d'entraînement pour le tambour (12) de fabrication de pneumatiques et pour la bande convoyeuse d'amenée (13) comprennent un dispositif de régulation (20), à l'aide duquel la bande convoyeuse d'amenée (13) et le tambour (12) de fabrication de pneumatiques peuvent être entraînés, dans la partie de début et la partie d'extrémité de la bande de matériau (16) devant être appliquée, à de faibles vitesses essentiellement identiques, alors que dans la partie médiane de la bande de matériau (16), la bande et le tambour sont entraînés à une vitesse plus élevée, auquel cas dans cette partie médiane la vitesse de rotation du tambour (12) de fabrication de pneumatiques est constante tandis que la vitesse de la bande convoyeuse d'amenée (13) peut être modifiée en fonction de la longueur effective de la bande de matériau (16).
